# EUROPÄISCHE PATENTSCHRIFT

(11) **EP 0 889 773 B1**
(45) Veröffentlichungstag und Bekanntmachung des Hinweises auf die Patenterteilung: **08.12.1999**
(21) Anmeldenummer: 97916369.8
(22) Anmeldetag: 21.03.1997
(51) Int. Cl.: B28C 5/42, B01F 15/00

(54) **HYDROSTATISCH-MECHANISCHES GETRIEBE ZUM ANTRIEB EINER MISCHTROMMEL**
HYDROSTATIC-MECHANICAL DRIVE FOR A MIXING DRUM
TRANSMISSION HYDROSTATIQUE-MECANIQUE POUR L'ENTRAINEMENT D'UN TAMBOUR MELANGEUR

(30) Priorität: 30.03.1996 DE 19612873
(43) Veröffentlichungstag der Anmeldung: 13.01.1999
(73) Patentinhaber: ZF FRIEDRICHSHAFEN Aktiengesellschaft, 88038 Friedrichshafen (DE)
(72) Erfinder: GEBHARD, Wolfgang, D-88048 Friedrichshafen (DE); MANN, Egon, D-88045 Friedrichshafen (DE)
(86) Internationale Anmeldenummer: EP9701432
(87) Internationale Veröffentlichungsnummer: WO9736723

(56) Entgegenhaltungen:
- EP-A- 0 056 865
- EP-A- 0 102 266
- EP-A- 0 603 421
- WO-A-94/23918
- GB-A- 936 493
- PATENT ABSTRACTS OF JAPAN vol. 014, no. 536 (M-1052), 27.November 1990 & JP 02 225145 A (DAIKIN IND LTD), 7.September 1990,

## Beschreibung

Die Erfindung bezieht sich auf ein hydrostatisch-mechanisches Getriebe zum Antrieb einer Mischtrommel, insbesondere eines Transportbeton-Mischers. Das Getriebe weist eine Hydraulikpumpe auf, die über Leitungen mit einem Hydraulikmotor verbunden ist. Die Hydraulikpumpe ist von einem Pumpengehäuse umgeben. Ein Getriebegehäuse dient der Aufnahme des Hydraulikmotors und eines Planetengetriebes. Ein Element dieses Planetengetriebes steht mit einem Antriebsflansch der Mischtrommel in Antriebsverbindung.

Ein hydrostatisch-mechanisches Getriebe mit vorstehend erläutertem Aufbau ist aus der DE-A 43 13 025 bekannt geworden. Zur Verbesserung der Kühlung wird bei diesem Getriebe aus dem Hoshdruckkreislauf ständig Öl ausgespeist. Andererseits wird dem Innenraum des Getriebegehäuses ständig gekühltes öl zugeführt, in der Weise, daß auch eine Kühlung des Hydraulikmotors erfolgt. Der Hydraulikmotor ist vorzugsweise als langsam laufender Radialkolbenmotor ausgeführt. Die Kolben des Radialkolbenmotors liegen über Rollen an einer Nockenbahn an, die einen etwa sinuswellenförmigen Verlauf hat. Jeder Kolben ist unter der Wirkung eines Federelementes im Zylinderblock geführt. Die Federelemente können beispielsweise aus Schraubendruckfedern gebildet sein. Sie bewirken eine ständige, kraftschlüssige Verbindung zwischen den Rollen der Kolben und der Nockenbahn. Somit ist gewährleistet, daß die Kolbenräume immer vollständig mit Öl befüllt bleiben. Diese Anordnung vermindert ein Nachpendeln der Betonmischer-Trommel, wenn der Verbrennungsmotor abgestellt wird.

Der vorliegenden Erfindung liegt die Aufgabe zugrunde, die Anordnung zum Verhindern des Nachpendelns der Mischtrommel mit geringem baulichen Mehraufwand weiter zu verbessern.

Diese Aufgabe wird mit einem auch die kennzeichnenden Merkmale des Hauptanspruches aufweisenden gattungsgemäßen hydrostatisch-mechanischen Getriebe gelöst.

Weitere, für die Erfindung wesentliche Merkmale sowie die daraus resultierenden Vorteile sind der nachfolgenden Beschreibung eines Ausführungsbeispiels der Erfindung zu entnehmen.

Es zeigen:
- Fig. 1: ein Hydraulikschema eines hydrostatisch-mechanischen Mischergetriebes und
- Fig. 2: einen stark vereinfachten Ausschnitt eines langsam laufenden Radialkolben-Hydromotors mit einem Nachsaugeventil.

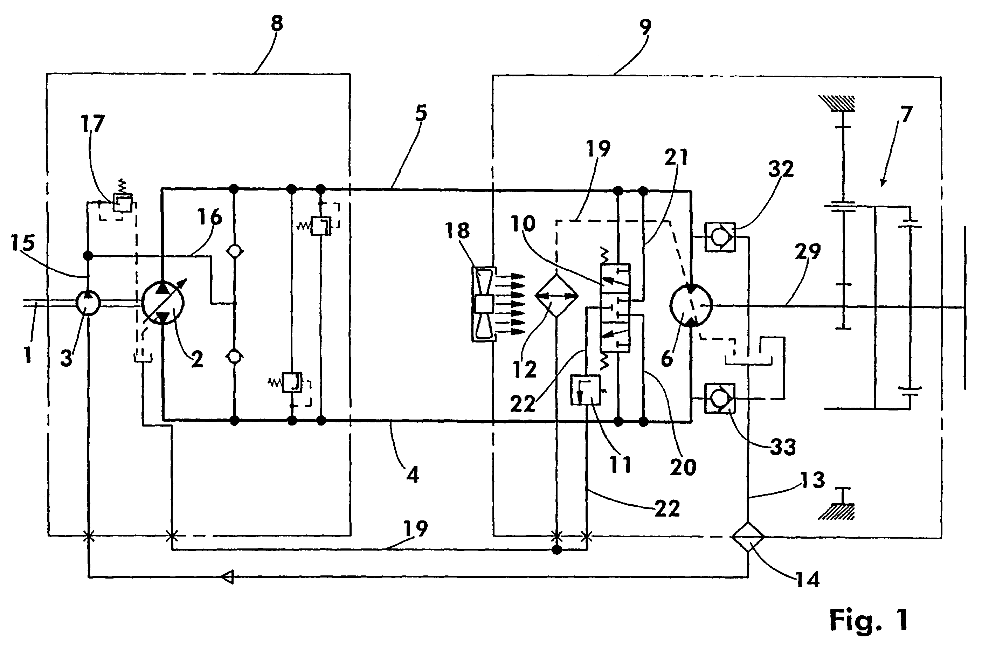

In Fig. 1 wird über eine Welle 1, die an einen selbst nicht dargestellten Verbrennungsmotor angeschlossen ist, eine Hydraulikpumpe 2 angetrieben. Die Hydraulikpumpe 2 ist als Verstelleinheit mit umkehrbaren Drehrichtungen ausgebildet. Zudem wird eine Speisepumpe 3 angetrieben.

Die Hydraulikpumpe ist über Leitungen 4 und 5 mit einem Hydraulikmotor 6 verbunden. Der Hyraulikmotor 6 treibt über ein nachgeschaltetes Planetengetriebe 7 eine selbst nicht abgebildete Betonmischer-Trommel an.

Die Hydraulikpumpe 2 ist von einem Pumpengehäuse 8 umgeben. Ein Getriebegehäuse 9 umgibt den Hydraulikmotor 6, das Planetengetriebe 7, einen Spülschieber 10 und ein Spülventil 11.

Am bzw. im Getriebegehäuse 9 ist ferner ein Ölkühler 12 angeordnet.

Eine Leitung 13 führt zu einem Filter 14 und von hieraus zur Speisepumpe 3. Die Speisepumpe 3 saugt aus dem Innenraum des Getriebegehäuses 9 Öl über die Leitung 13 und den Filter 14 an und fördert es über eine Leitung 15, von der eine Leitung 16 abzweigt, in den jeweiligen Niederdruckkreislauf. An die Leitung 15 bzw. 16 ist ein Druckbegrenzungsventil 17 angeschlossen.

Der Ölkühler 12 wird mit Kühlluft, erzeugt durch einen Lüfter 18, beaufschlagt.

Über eine Leitung 19 ist das Pumpengehäuse 8 mit dem Ölkühler 12 verbunden. Der nach dem Ölkühler 12 liegende Leitungsabschnitt der Leitung 19, der in der Zeichnung mit gestrichelten Linien dargestellt ist, mündet in unmittelbarer Nähe des Hydraulikmotors 6, so daß dieser von gekühltem Öl ständig umströmt wird, wobei hierbei das anfallende - erhitzte - Leckageöl durch Vermischung in das Innere des Getriebegehäuses abgeführt wird.

Von den Leitungen 4 und 5 führen Leitungen 20 und 21 zum Spülschieber 10. Je nach Schaltstellung des Spülschiebers 10 fließt ständig aus einer der Leitungen 4 oder 5 Öl zur Leitung 22, in der das Spülventil 11 liegt, und von dort zusammen mit dem Öl der Leitung 19 zum Ölkühler 12.

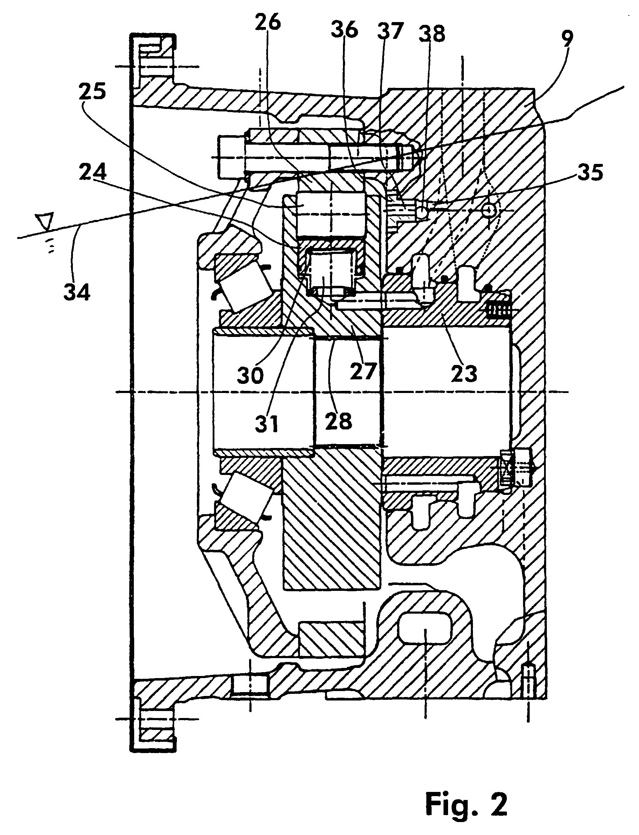

Das von der Hyraulikpumpe 2 geförderte Öl gelangt über einen Verteiler 23 (Fig. 2) zum Zylinderblock 23. Das Öl drückt gegen Kolben 24, wodurch sich eine Rolle 25 an einer Nockenbahn 26 (CAM) entlang bewegt. Die Nockenbahn 26 hat, gesehen von vorne, einen etwa sinuswellenförmigen Verlauf. Von den Kolben 24 des Hydraulikmotors 6 ist lediglich einer in der Zeichnung erkennbar. Es wird ein Zylinderblock 27 in Drehung versetzt. Über ein Keilwellenprofil 28 treibt der Hyraulikmotor 6 eine Eingangswelle 29 des Planetengetriebes 7 an.

Der Zeichnung ist zu entnehmen, daß jeder der Kolben 24 des Radialkolbenmotors unter der Wirkung eines Federelementes 30 im Zylinderblock 27 geführt ist. Die Federelemente 30 können beispielsweise aus Schraubendruckfedern gebildet sein. Die Federelemente 30 bewirken eine permanente kraftschlüssige Verbindung zwischen den Rollen 25 der Kolben 24 und der Nockenbahn 26. Die Aufgabe der Federelemente 30 besteht darin, den durch den Zylinderblock 27 und den Kolben 24 gebildeten Innenraum 31, in dem die Federelemente 30 angeordnet sind, ständig mit Öl gefüllt zu halten. Wenn nun die Hyraulikpumpe 2 stillsteht und ein Moment auf den Hyraulikmotor 6 eingeleitet wird, kehrt sich das Wirkprinzip des Hydraulikmotors um: er funktioniert nun als Hydraulikpumpe. Die Nockenbahn 26 drückt hierbei die Rolle 25 des Kolbens 24 radial nach innen und erzeugt im Innenraum 31 einen Druck, welcher dem angreifenden Moment entgegenwirkt. Über Ölleckage wird der Kolben 24 dennoch nach innen gedrückt. Der Zylinderblock 27 führt eine langsame Rotationsbewegung aus. Bei dieser Rotationsbewegung wird ein benachbarter Kolben 24 durch das Federelement 30 radial nach außen gedrückt und versucht, den Innenraum 31 erneut mit Öl zu befüllen.

Um den Befüllvorgang zu erleichtern, sind Nachsaugeventile 32 und 33 (vgl. Fig. 1) vorgesehen, über die ein sich radial nach außen bewegender Kolben 24 direkt Öl aus dem Innenraum des Getriebegehäuses 9 nachsaugen kann. Diese Nachsaugeventile 32 und 33 sind, wie aus der Zeichnung ersichtlich, als Rückschlagventile ausgebildet. Diese Rückschlagventile sind im Normalbetrieb, d. h. bei rotierender Hydraulikpumpe 2, durch den in den Leitungen 4 bzw. 5 herrschenden Systemdruck geschlossen. Die Nachsaugeventile stellen sicher, daß die Kolben 24 bei einem Stillstand der Hydraulikpumpe 2 in der Lage sind, immer genügend Öl nachzusaugen.

Die Nachsaugeventile 32 und 33 sind im Getriebegehäuse 9 unterhalb des Ölstandes 34, wie er sich in Einbaulage des hydrostatisch-mechanischen Getriebes einstellt, eingebaut. Jeweils ein Nachsaugeventil ist über eine Bohrung 35 mit der hochdruckführenden Leitung 4 bzw. 5 verbunden. Wenn in den Leitungen 4 und 5 Druck herrscht, schließen die Nachsaugeventile 32 und 33 in Richtung Innenraum des Getriebegehäuses 9 (Tank), so daß kein Öl vom geschlossenen Kreis in den Innenraum (Tank) gelangen kann. Steht die Hydraulikpumpe 2 still und wird von den Federelementen 30 der Kolben 24 ein Unterdruck erzeugt, öffnet das Nachsaugeventil 32 bzw. 33, in dessen Leitung der Unterdruck auftritt. Es wird dann direkt aus dem Innenraum des Getriebegehäuses 9 Öl nachgesaugt.

Die Nachsaugeventile 32, 33 bestehen aus einem Einschraubteil 36, dessen Zentrum eine Durchgangsbohrung 37 aufweist. Eine Kugel 38 verschließt oder gibt die Durchgangsbohrung 37 frei.

### Bezugszeichen

- 1: Welle
- 2: Hydraulikpumpe
- 3: Speisepumpe
- 4: Leitung
- 5: Leitung
- 6: Hydraulikmotor
- 7: Planetengetriebe
- 8: Pumpengehäuse
- 9: Getriebegehäuse
- 10: Spülschieber
- 11: Spülventil
- 12: Ölkühler
- 13: Leitung
- 14: Filter
- 15: Leitung
- 16: Leitung
- 17: Druckbegrenzungsventil
- 18: Lüfter
- 19: Leitung
- 20: Leitung
- 21: Leitung
- 22: Leitung
- 23: Verteiler
- 24: Kolben
- 25: Rolle
- 26: Nockenbahn
- 27: Zylinderblock
- 28: Keilwellenprofil
- 29: Eingangswelle
- 30: Federelement
- 31: Innenraum
- 32: Nachsaugeventil
- 33: Nachsaugeventil
- 34: Ölstand
- 35: Bohrung
- 36: Einschraubteil
- 37: Durchgangsbohrung
- 38: Kugel

## Patentansprüche

1. Hydrostatisch-mechanisches Getriebe zum Antrieb einer Mischtrommel, insbesondere eines Transportbeton-Mischers, mit einer Hyraulikpumpe (2), die über Leitungen (4, 5) mit einem Hydraulikmotor (6) verbunden ist, und einem Getriebegehäuse (9) zur Aufnahme des Hydraulikmotors, wobei die Kolben (24) des Hydraulikmotors durch Federelemente (30) über Rollen (25) ständig an einer Nockenbahn (26) in Anlage gehalten werden, dadurch **gekennzeichnet,** daß zwischen den Leitungen (4, 5) über jeweils ein Nachsaugeventil (33, 32) eine Verbindung zu einem Ölvorrat besteht, so daß bei Umkehr des Wirkungsprinzips des Hydraulikmotors (6) eine Verbindung vom Ölmittelvorrat zu Innenräumen (31) besteht, die durch die Kolben (24) und den Zylinderblock (27) gebildet werden.

2. Getriebe nach Anspruch 1, dadurch **gekennzeichnet,** daß die Nachsaugeventile (32, 33) als Rückschlagventile ausgebildet sind, die bei rotierender Hydraulikpumpe (2) geschlossen sind und bei Stillstand der Hydraulikpumpe (2) und Umkehr des Wirkungsprinzips des Hydraulikmotors (6) öffnen.

3. Getriebe nach den Ansprüchen 1 und 2, dadurch **gekennzeichnet,** daß die Nachsaugeventile (32, 33) im Inneren des Getriebegehäuses (9) unterhalb eines sich in Einbaulage des hydrostatisch-mechanischen Getriebes einstellenden Ölstandes (34) liegend angeordnet sind.

4. Getriebe nach Anspruch 2, dadurch **gekennzeichnet,** daß die Nachsaugeventil (32, 33) aus je einem Einschraubteil (36) mit einer Durchgangsbohrung (37) und einer Kugel (38) besteht, welche die Durchgangsbohrung (37) verschließt oder freigibt.

## Claims

1. Hydrostatic-mechanical transmission for driving a mixing drum, especially of a concrete mixer truck, with a hydraulic pump (2), which is connected via lines (4, 5) to a hydraulic motor (6), and a transmission casing (9) for accommodating the hydraulic motor, wherein the pistons (24) of the hydraulic motor are held constantly against a cam contact surface (26) by spring elements (30) via rollers (25), characterised in that there is a connection to an oil supply between the lines (4, 5) via a respective suction valve (33, 32), so that upon reversal of the operating principle of the hydraulic motor (6) there is a connection from the oil supply to the interior spaces (31), which are formed by the pistons (24) and the cylinder block (27).

2. Transmission according to claim 1, characterised in that the suction valves (32, 33) are formed as non-return valves which are closed when the hydraulic pump (2) is rotating and open when the hydraulic pump (2) is at a standstill and the operating principle of the hydraulic motor (6) is reversed.

3. Transmission according to claims 1 and 2, characterised in that the suction valves (32, 33) are disposed horizontally in the interior of the transmission casing (9) below an oil level (34) resulting when the hydrostatic-mechanical transmission is in the fitted position.

4. Transmission according to claim 2, characterised in that the suction valve (32, 33) consists of a respective screw-in part (36) with a through-hole (37) and a ball (38), which closes or opens the through-bore (37).

## Revendications

1. Transmission hydrostatique mécanique pour I'entraînement d'un tambour mélangeur, notamment d'une bétonnière transporteuse, comportant une pompe hydraulique (2) reliée par des conduites (4, 5) à un moteur hydraulique (6) et un carter de transmission (9) pour recevoir le moteur hydraulique, les pistons (24) du moteur hydraulique étant maintenus en permanence par des éléments ressort (30) au moyen de galets (25) en contact sur un chemin de cames (26), **caractérisée** en ce que, entre les conduites (4, 5), une liaison est assurée vers une réserve d'huile au moyen d'une soupape d'aspiration ultérieure (33, 32), de façon que, lors de l'inversion du principe d'actionnement du moteur hydraulique (6), une liaison existe entre la réserve d'huile et des chambres internes (31), lesquelles sont formées par les pistons (24) et le bloc-cylindres (27).

2. Transmission selon la revendication 1, **caractérisée** en ce que les soupapes d'aspiration ultérieure (32, 33) sont réalisées comme des soupapes de non-retour qui sont fermées pendant que la pompe hydraulique (2) est en rotation et s'ouvrent lors de l'arrêt de la pompe hydraulique (2) et de l'inversion du principe d'actionnement du moteur hydraulique (6).

3. Transmission selon les revendications 1 et 2, **caractérisée** en ce que, à l'intérieur du carter de transmission (9), les soupapes d'aspiration ultérieure (32, 33) sont placées couchées en dessous d'un niveau d'huile (34) s'établissant en position de montage de la transmission hydrostatique - mécanique.

4. Transmission selon la revendication 2, **caractérisée** en ce que les soupapes d'aspiration ultérieure (32, 33) se composent d'un élément vissé (36) avec un alésage traversant (37) et d'une bille (38), qui ferme ou ouvre l'alésage traversant (37).
